(19) Europäisches Patentamt
European Patent Office
Office européen des brevets

(11) Veröffentlichungsnummer: **0 024 322**
**B1**

# (12) EUROPÄISCHE PATENTSCHRIFT

(45) Veröffentlichungstag der Patentschrift: **30.05.84**

(51) Int. Cl.³: **C 09 B 44/04**, C 09 B 62/085, D 06 P 1/02

(21) Anmeldenummer: **80104580.8**

(22) Anmeldetag: **02.08.80**

(54) **Kationische Azofarbstoffe, ihre Herstellung, ihre Verwendung zum Färben von synthetischen und natürlichen Materialien und sie enthaltende Mittel.**

(30) Priorität: **16.08.79 DE 2933031**

(43) Veröffentlichungstag der Anmeldung:
**04.03.81 Patentblatt 81/9**

(45) Bekanntmachung des Hinweises auf die Patenterteilung:
**30.05.84 Patentblatt 84/22**

(84) Benannte Vertragsstaaten:
**CH DE FR GB IT LI**

(56) Entgegenhaltungen:
**DE - A - 1 644 230**
**DE - A - 2 351 869**
**FR - A - 1 441 147**
**JP - A - 47 015 476**
**US - A - 3 890 257**
**US - A - 4 065 500**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Nickel, Horst, Dr., Fontanestrasse 23, D-5090 Leverkusen1 (DE)**
Erfinder: **Müller, Friedhelm, Dr., Zum Hahnenberg 62, D-5068 Odenthal (DE)**
Erfinder: **Mummenhoff, Peter, Dr., Sileslusstrasse 76, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 024 322 B1

**Beschreibung**

Gegenstand der Erfindung sind kationische Azofarbstoffe der Formel

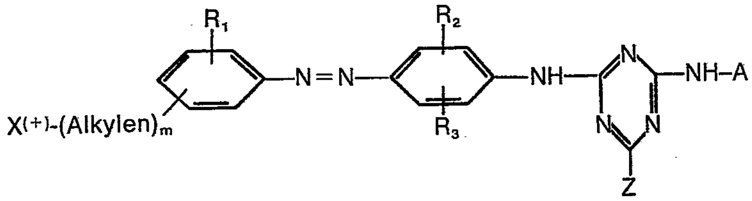

$An^{(-)}$ (I)

worin

$X^{(+)}$ eine Ammoniumgruppe,

m 0 oder 1,

$R_1$ Wasserstoff, $C_1$- bis $C_4$-Alkyl, $C_1$- bis $C_4$-Alkoxy oder Halogen,

$R_2$ und $R_3$ unabhängig voneinander Wasserstoff, $C_1$- bis $C_4$-Alkyl, $C_1$- bis $C_4$-Alkoxy oder Acylamino,

Z Halogen oder einen Rest der Formel

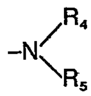 , $-OR_4$ oder $-SR_4$

$R_4$ und $R_5$ unabhängig voneinander Wasserstoff, $C_1$- bis $C_4$-Alkyl, Cyclohexyl, Phenyl, Benzyl oder Phenylethyl, die durch Hydroxy, $C_1$- bis $C_4$-Alkoxy, Chlor oder Cyan und der Cyclohexyl-, Phenyl- und Phenylethylrest zusätzlich durch $C_1$- bis $C_4$-Alkyl substituiert sein können, oder

$R_4$ und $R_5$ zusammen mit dem Stickstoffatom, an das sie gebunden sind, einen 5- oder 6gliedrigen Ring,

A einen Arylrest und

$An^{(-)}$ ein Anion bedeuten.

Unter der Ammoniumgruppe $X^{(+)}$ wird insbesondere eine Gruppe der Formel

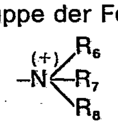

verstanden, worin

$R_6$, $R_7$ und $R_8$ unabhängig voneinander Wasserstoff, $C_1$- bis $C_4$-Alkyl, $C_3$- oder $C_4$-Alkenyl, Benzyl oder Phenylethyl, die durch Hydroxy, $C_1$- bis $C_4$-Alkoxy, Halogen oder Cyan und der Benzyl- und Phenylethylrest zusätzlich durch $C_1$- bis $C_4$-Alkyl substituiert sein können, oder

$R_6$ und $R_7$ zusammen mit dem Stickstoffatom, an das sie gebunden sind, einen 5- oder 6gliedrigen Ring bedeuten.

Alkylen steht insbesondere für einen Rest mit 1 bis 3 Kohlenstoffatomen. Unter Acylamino wird vorzugsweise $C_1$- bis $C_3$-Alkylcarbonylamino, $C_1$- bis $C_3$-Alkylsulfonylamino, Aminocarbonylamino oder Benzoylamino, insbesondere aber Acetylamino, Propionylamino oder Aminocarbonylamino verstanden. Halogen steht vorzugsweise für Fluor, Chlor oder Brom; im Falle von Z sind Fluor und Chlor und im übrigen Chlor und Brom besonders zu nennen.

A steht insbesondere für einen gegebenenfalls substituierten Phenyl- oder Naphthylrest. Als Substituenten kommen beispielsweise $C_1$- bis $C_4$-Alkyl, $C_1$- bis $C_4$-Alkoxy, Halogen, Acylamino, $C_1$- bis $C_4$-Alkylsulfonyl, Phenylsulfonyl oder Phenylazo in Frage, wobei die beiden Phenylreste ihrerseits durch z.B. $C_1$- bis $C_4$-Alkyl substituiert sein können. Bevorzugt steht A für einen Rest der Formel

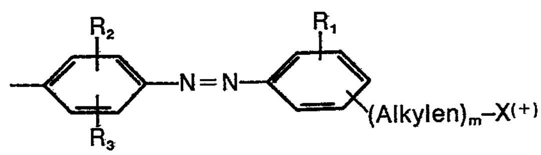

worin $R_1$, $R_2$, $R_3$, m und $X^{(+)}$ die in Formel (I) angegebene Bedeutung haben.

$R_4$ und $R_5$ bzw. $R_6$ und $R_7$ können gemeinsam mit dem Stickstoffatom, an das sie gebunden sind, beispielsweise einen Piperidin- oder Morpholinring bilden.

Von den Farbstoffen der Formel (I) sind die Farbstoffe der Formel

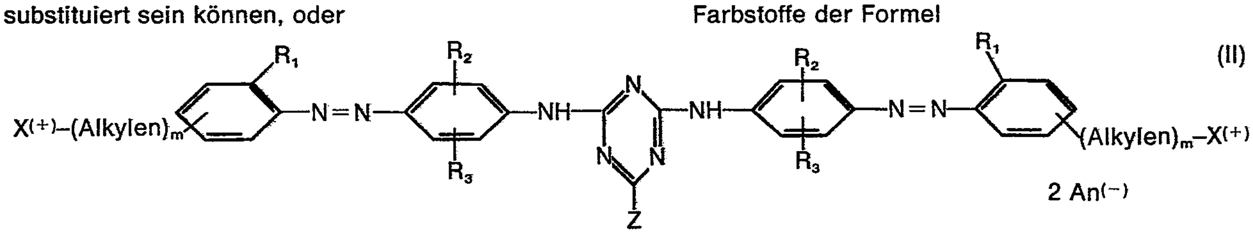

(II)

2 $An^{(-)}$

hervorzuheben, worin

$R_1$, $R_2$, $R_3$, $X^{(+)}$, Z, $An^{(-)}$ und m die in Formel (I) angegebene Bedeutung haben, und der Triazinring symmetrisch oder unsymmetrisch substituiert sein kann.

Besonders geeignete Farbstoffe haben die Formel

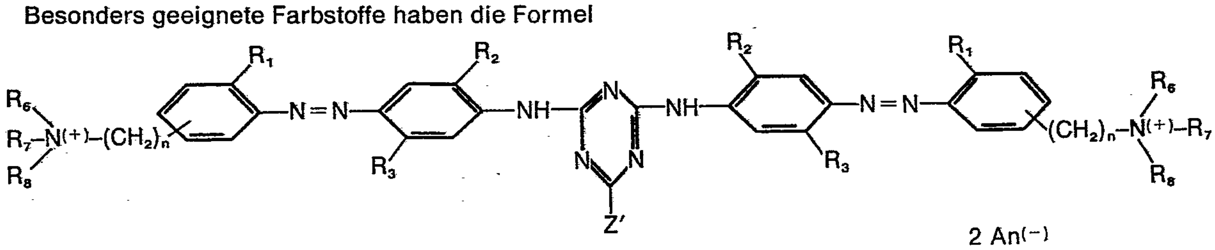

(III)

2 $An^{(-)}$

worin

n für 0 bis 2 und

Z′ für 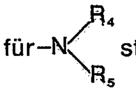 stehen und

$R_1$–$R_8$ und $An^{(-)}$ die vorstehend genannte Bedeutung haben.

Von den Farbstoffen der Formel (III) sind wiederum bevorzugt, worin

$R_1$ für Wasserstoff, Methyl, Chlor oder Methoxy,

$R_2$ und $R_3$ unabhängig voneinander für Wasserstoff, Methyl, Methoxy, Acetylamino, Propionylamino oder Aminocarbonylamino,

$R_4$–$R_8$ unabhängig voneinander für Methyl, Ethyl, Hydroxyethyl, Methoxyethyl, Ethoxyethyl, Chlorethyl, Cyanethyl, Benzyl oder Allyl und

n für 0 oder 1, besonders für 0, stehen.

Als Anionen $An^{(-)}$ kommen die für kationische Farbstoffe üblichen farblosen organischen und anorganischen Anionen beispielsweise Chlorid, Bromid, Jodid, Hydroxyl, Hydrogensulfat, Sulfat, Nitrat, Dihydrogenphosphat, Hydrogenphosphat, Phosphat, Carbonat, Methosulfat, Ethosulfat, Acetat, Propionat, Benzolsulfonat und Toluolsulfonat in Betracht.

Das Anion ist im allgemeinen durch das Herstellungsverfahren gegeben. Vorzugsweise liegen die Farbstoffe als Chloride, Hydrogensulfate, Sulfate, Methosulfate oder Acetate vor. Die Anionen können in bekannter Weise gegen andere Anionen ausgetauscht werden.

Gegenstand der Erfindung ist ausserdem die Herstellung der Farbstoffe (I). Sie erfolgt in bekannter Weise durch Umsetzung von Aminoazoverbindungen der Formel

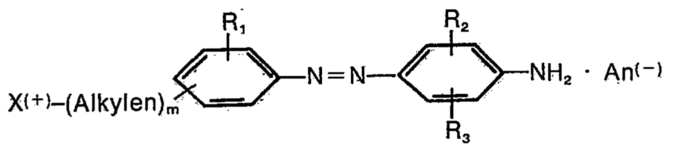 (IV)

oder deren Mischungen

oder der Formel

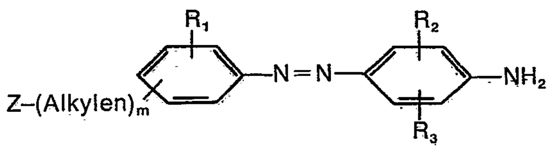 (V)

oder deren Mischungen,

worin $X^{(+)}$, m, $R_1$, $R_2$, $R_3$ und $An^{(-)}$ die in Formel (I) angegebene Bedeutung haben, und Z eine tertiäre Aminogruppe bedeutet,

zunächst im Molverhältnis 1 : 1 mit einem symmetrischen Cyanurhalogenid, vorzugsweise Cyanurchlorid oder -fluorid, umsetzt, dann im Molverhältnis 1 : 1 mit einem Amin

$$A\text{–}NH_2 \qquad (VI)$$

insbesondere mit einem weiteren Amin (IV) oder (V) umsetzt, das dritte Halogen des Triazinringes gegebenenfalls mit einer Verbindung der Formel

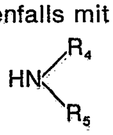 $HOR_4$ oder $HSR_4$

(VIIa) (VIIb) (VIIc)

zur Reaktion bringt und im Falle der Verbindungen (V) anschliessend mit einem Quaternierungsmittel behandelt. Selbstverständlich kann die Reihenfolge der Umsetzungen geändert werden.

Geeignete Amine (VIIa) sind beispielsweise:

Ammoniak, Methylamin, Ethylamin, Propylamin (n- und iso) n- und iso-Butylamin, tert.-Butylamin, Cyclohexylamin, Dimethylamin, Diethylamin, Din- oder iso-Propylamin, Methyl-ethylamin, Ethanolamin, Diethanolamin, Methylethanolamin, 2-Methoxyethylamin, 2-Ethoxyethylamin, Morpholin, Benzylamin, N-Methylbenzylamin, Anilin, N-Methylanilin, 2-, 3- oder 4-Methylanilin, 2-, 3- oder 4-Methoxyanilin, 2-, 3- oder 4-Chloranilin, N-Methyl-3- oder 4-Methylanilin, N-(2-Hydroxy-ethyl)-anilin, 1-Naphthylamin.

Die Hydroxy- und Mercapto-Verbindungen (VIIb) und (VIIc) werden gegebenenfalls in Form ihrer Alkaliderivate eingesetzt. Geeignete Verbindungen sind z.B.:

Na- und K-Hydroxid, Methanol, Ethanol, Glykol, Glykol-mono-methyl und -ethyl-ether, Diglykol, Diglykol-mono-methyl- und -ethyl-ether, Phenol, 4-Hydroxytoluol, Benzylalkohol, Na- und K-Hydrogensulfid und Thiophenol.

Als Quaternierungsmittel kommen z.B. in Betracht:

Halogenide wie Methylchlorid oder -bromid, Ethylchlorid oder -bromid, Allylchlorid oder Benzylchlorid, Arylsulfonsäureester wie Benzylsulfonsäure-methyl- oder -ethylester, Toluolsulfonsäure-methyl- oder -ethylester, Schwefelsäureester wie Dimethyl- oder Diethyl-sulfat.

Die Aminoazoverbindungen der Formeln (IV) erhält man durch Kupplung von Diazoniumverbindungen der Amine der Formel

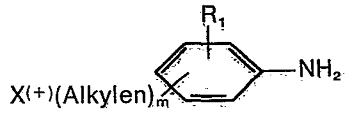 $An^{(-)}$ (VIII)

bzw.

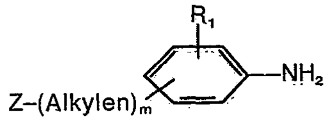 (IX)

mit den Kupplungskomponenten der Formel

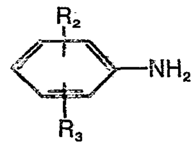 (X)

worin die Symbole die in den Formeln (I) und (V) angebene Bedeutung haben. Die Kupplungskomponenten müssen gegebenenfalls in Form ihrer N-Methansulfonsäure-Derivate eingesetzt werden.

Geeignete Amine der Formeln (VIII) und (IX) sind beispielsweise:

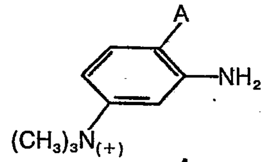 $Cl^{(-)}$ A = H, Cl, $CH_3$, $OCH_3$

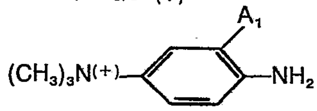 $Cl^{(-)}$ $A_1$ = H, $CH_3$

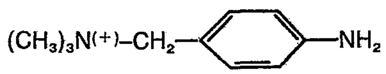 $Cl^{(-)}$

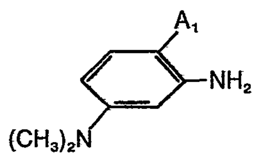 $A_1$ = H, $CH_3$

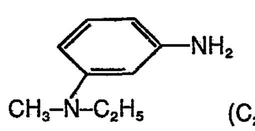

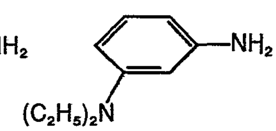

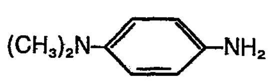

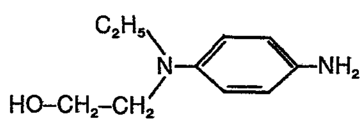

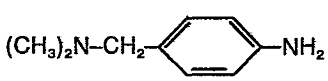

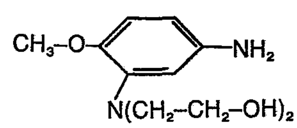

Geeignete Kupplungskomponenten (X) sind beispielsweise (die z.T. als Methansulfonsäuren eingesetzt werden müssen) Anilin, 2- oder 3-Aminotoluol, 2-Aminoanisol, 3-Aminoanisol, 3-Amino-4-methoxy-toluol, 2-Amino-4-methoxytoluol, 2-Ethylanilin, 2-Ethoxy-anilin, 3-Acetylaminoanilin, 3-Propionylamino-anilin, 3-Aminophenylharnstoff.

Die Farbstoffe werden zum Färben von mit kationischen Farbstoffen färbbaren Materialien verwendet. Genannt seien beispielsweise: Polyacrylnitril, sauer modifizierte Polyester, z.B. Polyglykolterephthalate, wie sie in der belgischen Patentschrift 549 179 oder US-Patentschrift 2 893 816, beschrieben werden, sauer modifizierte Polyamide, tannierte vegitabilische Fasern (Baumwolle), Leder und vorzugsweise Papier. Geeignet sind die Farbstoffe zum Färben von geleimtem sowie umgeleimtem Papier, wobei von gebleichtem oder ungebleichtem Zellstoff ausgegangen werden kann und Laub- oder Nadelholz-Zellstoff wie Birken- und/oder Kiefern-Sulfit und/oder Sulfat-Zellstoff verwendet werden kann.

Die Farbstoffe werden sowohl als Pulver- bzw. Granulat-Präparationen als auch in Form von konzentrierten Lösungen zum Einsatz gebracht. Pulver-Präparationen werden in üblicher Weise eingestellt mit Stellmaterialien wie Natriumsulfat, -phosphat, -chlorid, -acetat in Gegenwart von Entstaubungsmitteln. Konzentrierte Farbstofflösungen können wässriger oder wässrig/organischer Art sein, wobei übliche, umweltfreundliche und möglichst gut abbaubare Zusätze bevorzugt werden wie organische Säuren, vorzugsweise Essigsäure, Ameisensäure, Alkohole wie Glykol, Diglykol, Diglykolether, vorzugsweise Methyl- oder Ethylether.

Die Farbstoffe besitzen ein ausgezeichnetes Ziehvermögen und sehr gute Allgemein-Echtheiten. Papierfärbungen zeichnen sich durch sehr gute Nassechtheiten sowie Alaun-, Säure- und Alkali-Echtheit aus. Sie besitzen eine überraschend hohe Lichtechtheit, bei gleichzeitig hoher Klarheit und Farbstärke.

Kationische, eine Triazinylgruppe enthaltende Azofarbstoffe und ihre Verwendung zum Färben von Wolle, Seide und Polyacrylnitril-Fasern sind aus der JP-A-4 715 476 (1972) bekannt. Sie unterscheiden sich von den neuen Farbstoffen durch das Brückenglied zwischen Ammonium-Gruppe und Phenylrest, das eine Alkylencarbonyl-Brücke darstellt.

Beispiel 1

(1) 18,5 Teile (0,1 Mol) Cyanurchlorid, gelöst in 200 Teilen Aceton, werden in 300 Teilen Eis-Wasser suspendiert. Zu dieser Suspension gibt man bei etwa 5 °C als 1. Kondensationskomponente die Lösung von 33,5 Teilen (0,1 Mol) der Aminoazoverbindung

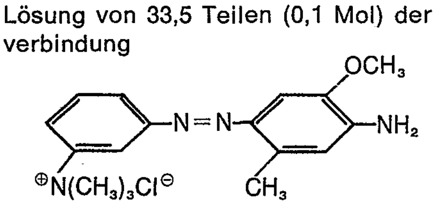 (1.1)

in 1000 Teilen Wasser und rührt bei Raumtemperatur bis die Erstkondensation beendet ist, in dem man pH 4 bis 5 enthält und die freiwerdende Säure mit 20%iger Natriumcarbonatlösung neutralisiert. Das Umsetzungsprodukt fällt aus.

Dann gibt man als 2. Kondensationskomponente die Lösung von 33,5 Teilen (0,1 Mol) der obigen Aminoazoverbindung (1.1) in 1000 Teilen Wasser zu, erwärmt auf 50 °C, hält den pH-Wert bei 5 durch Zutropfen von 20%iger Sodalösung und rührt bis die Zweitkondensation beendet ist. Der ausgefallene Farbstoff wird abgesaugt und die erhaltene Farbstoff-Paste im Vakuum getrocknet. Man erhält ein dunkles Pulver, das sich in Wasser mit gelber Farbe löst. Der Farbstoff färbt Papier in rotstichig gelben Tönen.

(2) Zur 3. Kondensation löst man die erhaltene obige Farbstoffpaste in 1700 Teilen Wasser bei etwa 50 °C, fügt 20 ml 25%ige Ammoniak-Lösung zu und hält die Lösung bei 98 bis 100 °C bis die Umsetzung des Chlors des Triazinfarbstoffs beendet ist (etwa eine Stunde). Anschliessend säuert man die Salzsäure an und isoliert den Farbstoff nach Aussalzen mit Natriumchlorid. Die Farbstoffpaste wird im Vakuum getrocknet. Man erhält ein dunkles Pulver, das sich in Wasser mit gelber Farbe löst. Papier wird in rotstichig gelben Tönen gefärbt. Der $\lambda_{max}$-Wert des Farbstoffs beträgt 400 nm.

(3) Verwendet man zur 3. Umsetzung anstelle des Ammoniak (A) 10 Teile 2-Aminoethanol (B) und verfährt wie unter (2) beschrieben, so erhält man ebenfalls einen rotstichig gelben Farbstoff, der Papier in lichtechten, alaunbeständigen, rotstichig gelben Tönen färbt. Der Farbstoff hat einen $\lambda_{max}$-Wert von 418 nm.

Ähnliche Farbstoffe erhält man, wenn man die Kondensation mit Diethanolamin (C) oder Methylethanolamin (D), Ethyl- oder Propanol-amin (E), Diisopropanolamin (F), N-(β-Hydroxyethyl)-anilin (G) oder 2-Methylanilin (H) ausführt.

(4) Gibt man zu obigem Erstkondensationsprodukt (1.1) mit Cyanurchlorid die Lösung von 30 Teilen (0,1 Mol) der Aminoazoverbindung der Formel

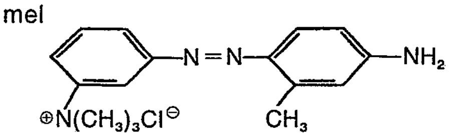 (1.2)

(hergestellt durch Kuppeln von diazotiertem 3-Aminobenzoltrimethylammoniumchlorid mit 3-Aminotoluol) in 1000 Teilen Wasser und kondensiert bei 50 °C wie oben beschrieben, so erhält man nach Isolation und Trocknung einen Farbstoff, der sich in Wasser mit gelber Farbe löst und Papier in gelben Tönen färbt.

(5) Kondensiert man den unter (4) beschriebenen Farbstoff mit Ammoniak wie oben (2) beschrieben, so wird ein gelber Farbstoff erhalten, der Papier in gelben Tönen färbt.

(6) Führt man die 3. Kondensation des unter (4) beschriebenen Farbstoffs mit 2-Aminoethanol oder Diethanolamin oder Methylethanolamin oder Diisopropanolamin durch, so erhält man Farbstoffe, die Papier in gelben Tönen färben.

(7) Kondensiert man das Erstkondensationsprodukt (1.1) mit Cyanurchlorid in der zweiten Stufe mit der Lösung von 6,1 Teilen (0,1 Mol) Ethanolamin in 50 Teilen Wasser bei 40 bis 50° und anschliessend mit der Lösung von 0,1 Mol der Aminoazoverbindung (1.1) in der dritten Stufe bei 95 bis 100°, so erhält man nach Ansäuern und Aussalzen einen Farbstoff, der mit dem unter (3) mit Ethanolamin beschriebenen identisch ist und Papier in rotstichig gelben Tönen färbt.

In der folgenden Tabelle werden weitere Farbstoffe aufgeführt, die in analoger Weise wie im obigen Beispiel 1 beschrieben synthetisiert werden. In den Spalten 1 bis 3 werden die Kondensationskomponenten 1, 2 und 3, in Spalte 4 der Farbton einer Papierfärbung angegeben. (Abkürzungen siehe obiges Beispiel (3)).

| 1 | 2 | 3 | 4 |
|---|---|---|---|
| 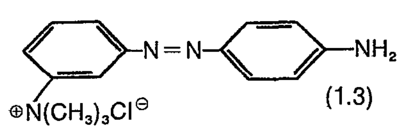 (1.3) | 1.3 | – | grünstichig gelb |
| | 1.3 | A | grünstichig gelb |
| | 1.3 | B | grünstichig gelb |
| | 1.3 | C | grünstichig gelb |
| | 1.3 | D | grünstichig gelb |
| | 1.3 | F | grünstichig gelb |

| 1 | 2 | 3 | 4 |
|---|---|---|---|
| 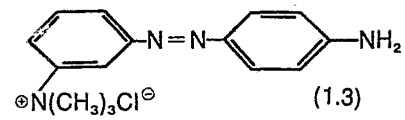 (1.3) | 1.2 | A | grünstichig gelb |
| | 1.2 | B | grünstichig gelb |
| | 1.1 | B | Gelb |
| | 1.1 | C | Gelb |
| | 1.1 | D | Gelb |
| 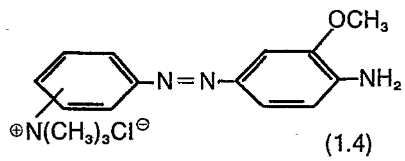 (1.4) | 1.4 | — | Gelb |
| | 1.4 | A | Gelb |
| | 1.4 | B | Gelb |
| | 1.4 | C | Gelb |
| | 1.4 | D | Gelb |
| | 1.2 | B | grünstichig gelb |
| | 1.2 | C | grünstichig gelb |
| | 1.3 | B | grünstichig gelb |
| | 1.3 | D | grünstichig gelb |
| | 1.1 | B | Gelb |
| | 1.1 | C | Gelb |
| | 1.1 | D | Gelb |
| | 1.4 | G | Gelb |
| | 1.4 | H | Gelb |
| | B | 1.4 | Gelb |
| | C | 1.4 | Gelb |
| | D | 1.4 | Gelb |
| | G | 1.4 | Gelb |
| 1.2 | 1.2 | – | Gelb |
| 1.2 | 1.2 | A | Gelb |
| 1.2 | 1.2 | B | Gelb |
| 1.2 | 1.2 | C | Gelb |
| 1.2 | 1.2 | D | Gelb |
| 1.2 | 1.2 | G | Gelb |
| 1.2 | 1.3 | D | grünstichig gelb |
| 1.2 | 1.3 | G | grünstichig gelb |
| 1.2 | G | 1.3 | grünstichig gelb |

Beispiel 2

Ein aus 60% Holzschliff und 40% ungebleichtem Sulfitzellstoff bestehender Trockenstoff wird im Holländer mit Wasser angeschlagen und bis zum Mahlgrad 40°SR gemahlen, so dass der Trokkengehalt etwas über 2,5% liegt und anschliessend mit Wasser auf exakt 2,5% Trockengehalt des Dickstoffs eingestellt.

200 Teile dieses Dickstoffs werden mit 5 Teilen einer 0,5%igen wässrigen Lösung des Farbstoffs der Formel

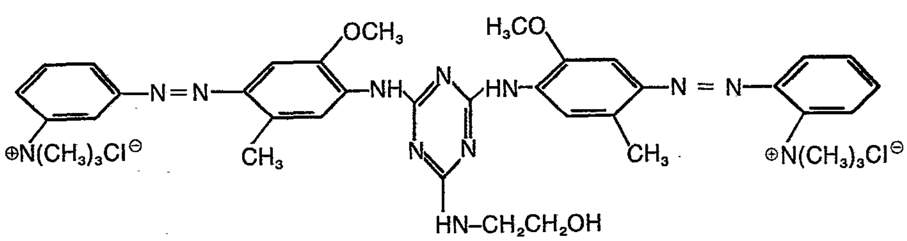

1.(3)

versetzt, ca. 5 Minuten verrührt, 2% Harzleim und 4% Alaun (bezogen auf Trockenstoff) zugegeben und wiederum einige Minuten homogen verrührt. Man verdünnt dann die Masse mit ca. 500 Teilen Wasser und stellt hieraus in üblicher Weise durch Absaugen über einen Blattbildner Papierblätter her. Die Papierblätter weisen eine kräftige rotstichig gelbe Färbung auf.

**Patentansprüche**

1. Kationische Azofarbstoffe der allgemeinen Formel

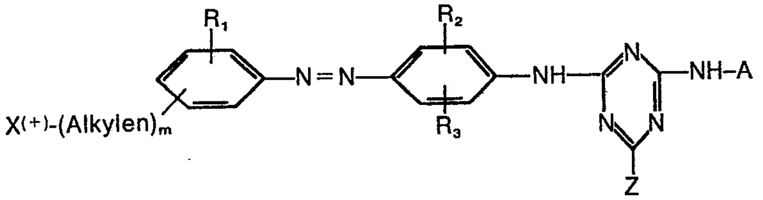

An$^{(-)}$

worin

$X^{(+)}$ eine Ammoniumgruppe,

m 0 oder 1,

$R_1$ Wasserstoff, $C_1$- bis $C_4$-Alkyl, $C_1$- bis $C_4$-Alkoxy oder Halogen,

$R_2$ und $R_3$ unabhängig voneinander Wasserstoff, $C_1$- bis $C_4$-Alkyl, $C_1$- bis $C_4$-Alkoxy oder Acylamino,

Z Halogen oder einen Rest der Formel

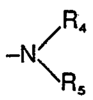 , $-OR_4$ oder $-SR_4$

$R_4$ und $R_5$ unabhängig voneinander Wasserstoff, $C_1$- bis $C_4$-Alkyl, Cyclohexyl, Phenyl, Benzyl oder Phenylethyl, die durch Hydroxy, $C_1$- bis $C_4$-Alkoxy, Chlor oder Cyan und der Cyclohexyl-, Phenyl-, Benzyl- und Phenylethylrest zusätzlich durch $C_1$- bis $C_4$-Alkyl substituiert sein können, oder

$R_4$ und $R_5$ zusammen mit dem Stickstoffatom, an das sie gebunden sind, einen 5- oder 6gliedrigen Ring,

A einen Arylrest und

An$^{(-)}$ ein Anion bedeuten.

2. Kationische Azofarbstoffe der allgemeinen Formel

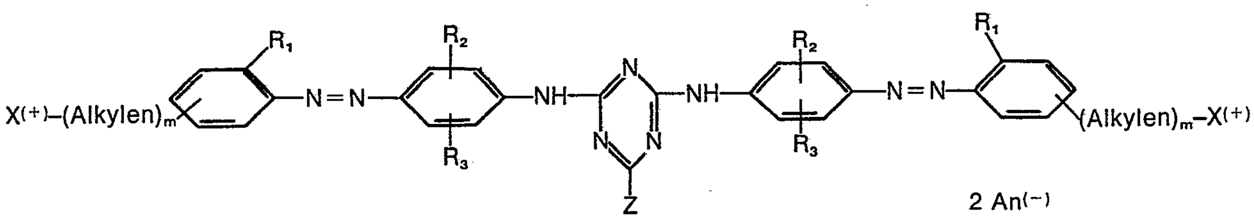

2 An$^{(-)}$

worin $R_1$, $R_2$, $R_3$, $X^{(+)}$, Z, An$^{(-)}$ und m die in Anspruch 1 angegebene Bedeutung haben, und der Triazinring symmetrisch oder unsymmetrisch substituiert sein kann.

3. Kationische Azofarbstoffe der allgemeinen Formel

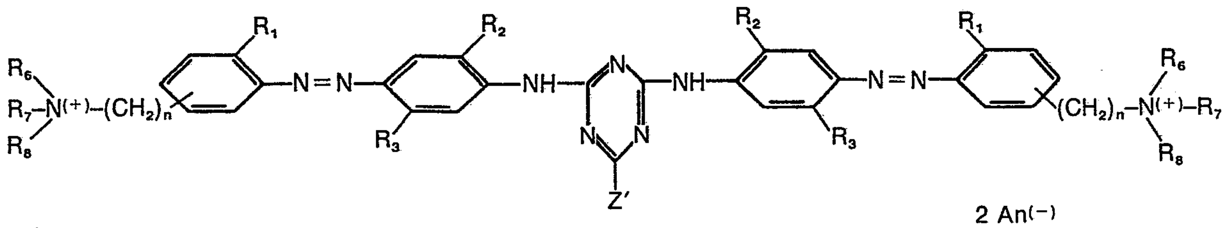

2 An$^{(-)}$

worin

n 0 bis 2,

Z′ 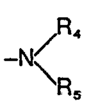

$R_4$ und $R_5$ unabhängig voneinander Wasserstoff, $C_1$- bis $C_4$-Alkyl, Cyclohexyl, Phenyl, Benzyl oder Phenylethyl, die durch Hydroxy, $C_1$- bis $C_4$-Alkoxy, Chlor oder Cyan und der Cyclohexyl-, Phenyl-, Benzyl- und Phenylethylrest zusätzlich durch $C_1$- bis $C_4$-Alkyl substituiert sein können, oder

$R_4$ und $R_5$ gemeinsam mit dem Stickstoffatom, an das sie gebunden sind, einen Piperidin- oder Morpholinring,

$R_6$, $R_7$ und $R_8$ unabhängig voneinander Wasserstoff, $C_1$- bis $C_4$-Alkyl, $C_3$- oder $C_4$-Alkenyl, Benzyl oder Phenylethyl, die durch Hydroxy, $C_1$- bis $C_4$-Alkoxy, Halogen oder Cyan und der Benzyl- und Phenylethylrest zusätzlich durch $C_1$- bis $C_4$-Alkyl substituiert sein können, oder

$R_6$ und $R_7$ gemeinsam mit dem Stickstoffatom, an das sie gebunden sind, einen Piperidin- oder Morpholinring bedeuten, und

$R_1$, $R_2$, $R_3$ und An$^{(-)}$ die in Anspruch 1 angegebene Bedeutung haben.

4. Kationische Azofarbstoffe der allgemeinen Formel des Anspruchs 3, worin

$R_1$ für Wasserstoff, Methyl, Chlor oder Methoxy,

$R_2$ und $R_3$ unabhängig voneinander für Wasserstoff, Methyl, Methoxy, Acetylamino, Propionylamino oder Aminocarbonylamino,

$R_4$, $R_5$ und $R_6$ unabhängig voneinander für Methyl, Ethyl, Hydroxyethyl, Methoxyethyl, Ethoxyethyl, Chlorethyl, Cyanethyl, Benzyl oder Allyl und n für 0 oder 1, besonders für 0 stehen.

5. Verfahren zur Herstellung von kationischen Azofarbstoffen des Anspruchs 1, dadurch gekennzeichnet, dass man symmetrische Cyanurhalogenide mit Aminoazoverbindungen der allgemeinen Formel

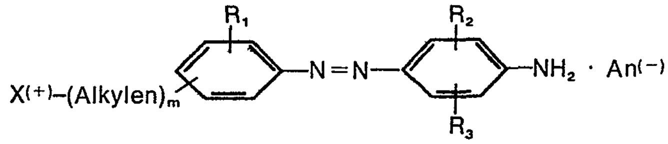

oder deren Mischungen
oder der allgemeinen Formel

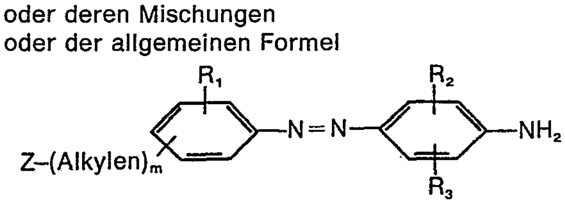

oder deren Mischungen,

worin $X^{(+)}$, m, $R_1$, $R_2$, $R_3$ und $An^{(-)}$ die Bedeutung des Anspruchs 1 haben und Z für eine tertiäre Aminogruppe steht,

und gegebenenfalls mit Verbindungen der Formel

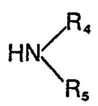 $HOR_4$ oder $HSR_4$ ,

worin $R_4$ und $R_5$ die Bedeutung des Anspruchs 1 haben, umsetzt und die Gruppe Z zur Gruppe $-X^{(+)} \cdot An^{(-)}$ quaterniert.

6. Verfahren zum Färben von Bedrucken von Polyacrylnitril, sauer-modifizierten Polyestern und Polyamiden, tannierter Baumwolle und Papier, dadurch gekennzeichnet, dass man Farbstoffe des Anspruchs 1 verwendet.

7. Farbstoffpräparationen, dadurch gekennzeichnet, dass sie Farbstoffe des Anspruchs 1 enthalten.

**Claims**

1. Cationic azo dyestuffs of the general formula

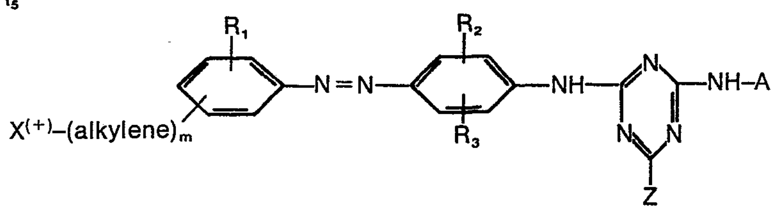 $An^{(-)}$

wherein

$X^{(+)}$ denotes an ammonium group,

m denotes 0 or 1,

$R_1$ denotes hydrogen, $C_1$- to $C_4$-alkyl, $C_1$- to $C_4$-alkoxy or halogen,

$R_2$ and $R_3$ independently of one another denote hydrogen, $C_1$- to $C_4$-alkyl, $C_1$- to $C_4$-alkoxy or acylamino,

Z denotes halogen or a radical of the formula

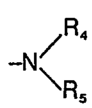 , $-OR_4$ or $-SR_4$

$R_4$ and $R_5$ independently of one another denote hydrogen, or $C_1$- to $C_4$-alkyl, cyclohexyl, phenyl, benzyl or phenylethyl, it being possible for these radicals to be substituted by hydroxyl, $C_1$- to $C_4$-alkoxy, chlorine or cyano and for the cyclohexyl, phenyl, benzyl and phenylethyl radical additionally to be substituted by $C_1$- to $C_4$-alkyl, or

$R_4$ and $R_5$, together with the nitrogen atom to which they are bonded, denote a 5- or 6-membered ring,

A denotes an aryl radical and

$An^{(-)}$ denotes an anion.

2. Cationic azo dyestuffs of the general formula

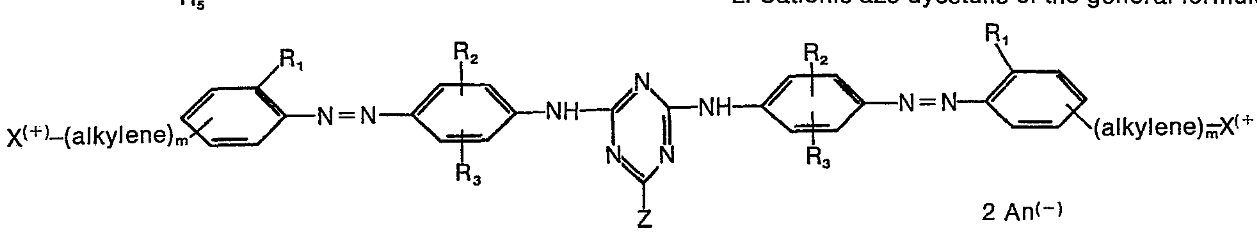

2 $An^{(-)}$

wherein

$R_1$, $R_2$, $R_3$, $X^{(+)}$, Z, $An^{(-)}$ an m have the meaning indicated in Claim 1,

and wherein the triazine ring can be symmetrically or unsymmetrically substituted.

3. Cationic azo dyestuffs of the general formula

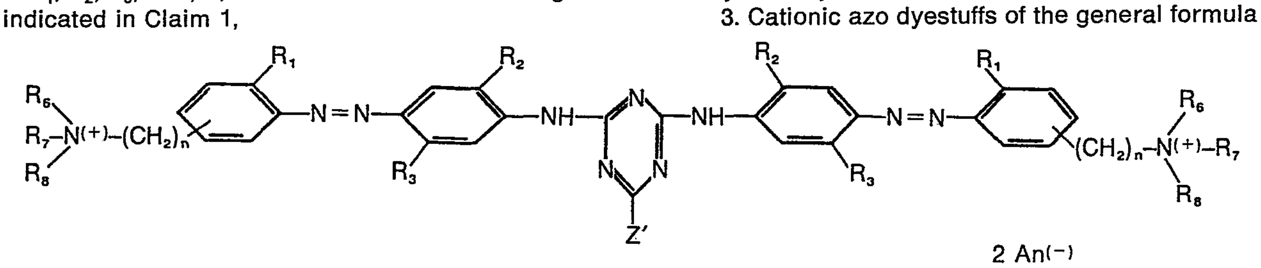

2 $An^{(-)}$

wherein

n denotes a number from 0 to 2,

Z′ denotes 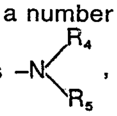 ,

$R_4$ and $R_5$ independently of one another denote hydrogen, or $C_1$- to $C_4$-alkyl, cyclohexyl, phenyl, benzyl or phenylethyl, it being possible for these radicals to be substituted by hydroxyl, $C_1$- to $C_4$-alkoxy, chlorine or cyano and for the cyclohexyl, phenyl, benzyl and phenylethyl radical additionally to be substituted by $C_1$- to $C_4$- alkyl, or

$R_4$ and $R_5$, together with the nitrogen atom to which they are bonded, denote a piperidine or morpholine ring,

$R_6$, $R_7$ and $R_8$ independently of one another denote hydrogen, or $C_1$- to $C_4$-alkyl, $C_3$- or $C_4$-alkenyl, benzyl or phenylethyl, it being possible for these radicals to be substituted by hydroxyl, $C_1$- to $C_4$-alkoxy, halogen or cyano and for the benzyl and phenylethyl radical additionally to be substituted by $C_1$- to $C_4$-alkyl, or

$R_6$ and $R_7$, together with the nitrogen atom to which they are bonded, denote a piperidine or morpholine ring, and

$R_1$, $R_2$, $R_3$ and $An^{(-)}$ have the meaning indicated in Claim 1.

4. Cationic azo dyestuffs of the general formula of Claim 3,

wherein

$R_1$ represents hydrogen, methyl, chlorine or methoxy,

$R_2$ and $R_3$ independently of one another represent hydrogen, methyl, methoxy, acetylamino, propionylamino or aminocarbonylamino,

$R_4$, $R_5$ and $R_6$ independently of one another represent methyl, ethyl, hydroxyethyl, methoxyethyl, ethoxyethyl, chloroethyl, cyanoethyl, benzyl or allyl and

n represents 0 or 1, in particular 0.

5. Process for the preparation of cationic azo dyestuffs of Claim 1, characterised in that symmetric cyanuric halides are reacted with aminoazo compounds of the general formula

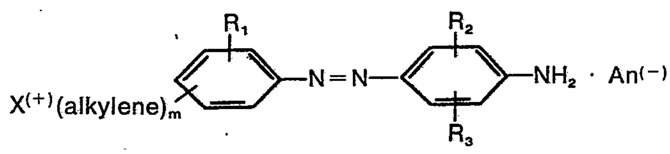

or mixtures thereof, or of the general formula

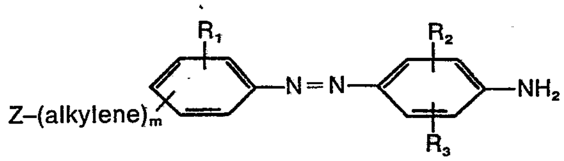

or mixtures thereof,

wherein

$X^{(+)}$, m, $R_1$, $R_2$, $R_3$ and $An^{(-)}$ have the meaning of Claim 1 and

Z represents a tertiary amino group,

and, if appropriate, with compounds of the formula

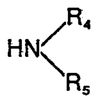 $HOR_4$ or $HSR_4$

wherein

$R_4$ and $R_5$ have the meaning of Claim 1,

and the group Z is quaternised to the group $-X^{(+)} \cdot An^{(-)}$.

6. Process for dyeing of printing polyacrylonitrile, acid-modified polyesters and polyamides, tannin-treated cotton and paper, characterised in that dyestuffs of Claim 1 are used.

7. Dyestuff preparations, characterised in that they contain dyestuffs of Claim 1.

**Revendications**

1. Colorants azoïques cationiques de formule générale

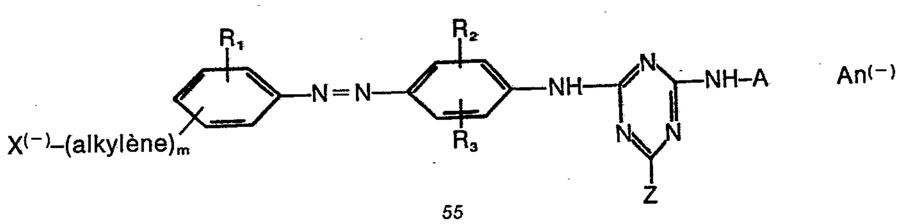

dans laquelle

$X^{(+)}$ représente un groupe ammonium,

m est égal à 0 ou 1,

$R_1$ représente l'hydrogène, un groupe alkyle en $C_1$–$C_4$–alcoxy en $C_1$–$C_4$ ou un halogène,

$R_2$ et $R_3$ représentent chacun, indépendamment l'un de l'autre, l'hydrogène, un groupe alkyle en $C_1$–$C_4$, alcoxy en $C_1$–$C_4$ ou acylamino,

Z représente un halogène ou un reste de formule

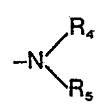 , $-OR_4$ ou $-SR_4$

$R_4$ et $R_5$ représentent chacun, indépendamment l'un de l'autre, l'hydrogène, un groupe alkyle en $C_1$–$C_4$, cyclohexyle, phényle, benzyle ou phényléthyle qui peuvent être substitués par des groupes hydroxy, alcoxy en $C_1$–$C_4$, le chlore ou des groupes cyano et en outre, pour les restes cyclohexyle, phényle, benzyle et phényléthyle, par un groupe alkyle en $C_1$–$C_4$, ou bien

$R_4$ et $R_5$ forment ensemble et avec l'atome d'azote sur lequel ils ont fixés un noyau à 5 ou 6 chaînons,

A représente un reste aryle et

$An^{(-)}$ représente un anion.

2. Colorants azoïques cationiques de formule générale

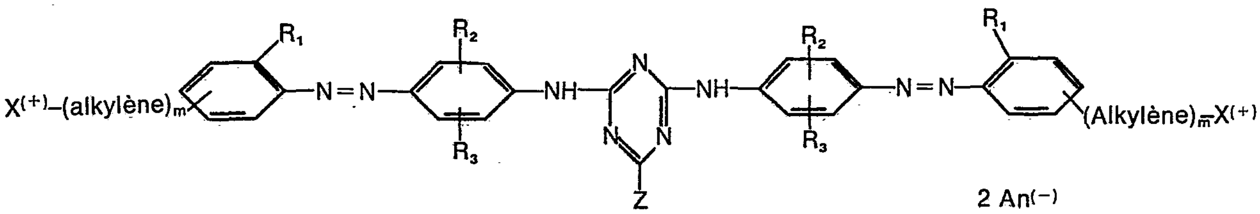

2 $An^{(-)}$

dans laquelle $R_1$, $R_2$, $R_3$, $X^{(+)}$, Z, $An^{(-)}$ et m ont les significations indiquées dans la revendication 1, et le noyau de triazine peut porter des substituants symétriques ou asymétriques.

3. Colorants azoïques cationiques de formule générale

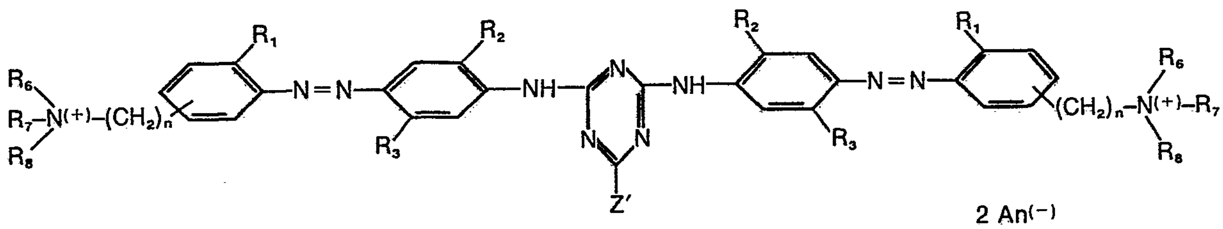

2 $An^{(-)}$

dans laquelle

n peut prendre une valeur de 0 à 2,

Z′ représente 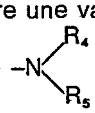 ,

$R_4$ et $R_5$ représentent chacun, indépendamment l'un de l'autre, l'hydrogène, un groupe alkyle en $C_1$–$C_4$, cyclohexyle, phényle, benzyle ou phényléthyle qui peuvent être substitués par des groupes hydroxy, alcoxy en $C_1$–$C_4$, le chlore ou des groupes cyano et en outre, pour les restes cyclohexyle, phényle, benzyle et phényléthyle, par un groupe alkyle en $C_1$–$C_4$, ou bien

$R_4$ et $R_5$ forment ensemble et avec l'atome d'azote sur lequel ils sont fixés, un noyau pipéridine ou morpholine,

$R_6$, $R_7$ et $R_8$ représentent chacun, indépendamment l'un de l'autre, l'hydrogène, un groupe alkyle en $C_1$–$C_4$, alcényle en $C_3$–$C_4$, benzyle ou phényléthyle, qui peuvent être substitués par des groupes hydroxy, alcoxy en $C_1$–$C_4$, des halogènes ou des groupes cyano et en outre, pour les groupes benzyle et phényléthyle, par un groupe alkyle en $C_1$–$C_4$, ou bien

$R_6$ et $R_7$ forment ensemble et avec l'atome d'azote sur lequel ils sont fixés, un cycle pipéridine ou morpholine, et

$R_1$, $R_2$, $R_3$ et $An^{(-)}$ ont les significations indiquées dans la revendication 1.

4. Colorants azoïques cationiques de formule générale de la revendication 3, dans laquelle

$R_1$ représente l'hydrogène, un groupe méthyle, le chlore ou un groupe méthoxy,

$R_2$ et $R_3$ représentent chacun, indépendamment l'un de l'autre, l'hydrogène, un groupe méthyle, méthoxy, acétylamino, propionylamino ou aminocarbonylamino,

$R_4$, $R_5$ et $R_6$ représentent chacun, indépendamment l'un de l'autre un groupe méthyle, éthyle, hydroxyéthyle, méthoxyéthyle, éthoxyéthyle, chloréthyle, cyanéthyle, benzyle ou allyle et

n est égal à 0 ou 1, plus particulièrement à 0.

5. Procédé de préparation des colorants azoïques cationiques de la revendication 1, caractérisé en ce que l'on fait réagir des halogénures de cyanuryle symétriques avec des composés amino-azoïques de formule générale

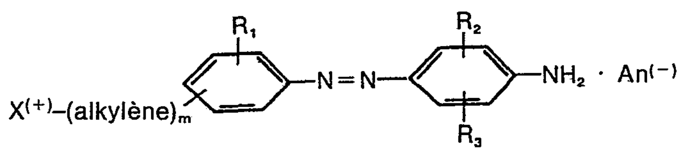

ou leurs mélanges,

ou de formule générale

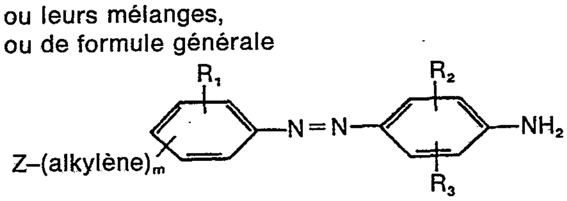

ou leurs mélanges,

dans lesquels $X^{(+)}$, m, $R_1$, $R_2$, $R_3$ et $An^{(-)}$ ont les significations indiquées dans la revendication 1, Z représentant un groupe amino tertiaire,

et éventuellement avec des composés de formule

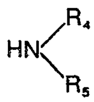 $HOR_4$ ou $HSR_4$

dans laquelle $R_4$ et $R_5$ ont les significations indiquées dans la revendication 1, et on quaternise le groupe Z en le groupe $-X^{(+)} \cdot An^{(-)}$.

6. Procédé pour la teinture et l'impression du polyacrylonitrile, des polyesters et des polyamides à modification acide, du coton tanné et du papier, caractérisé en ce que l'on utilise des colorants de la revendication 1.

7. Compositions tinctoriales caractérisées en ce qu'elles contiennent des colorants de la revendication 1.